# EUROPEAN PATENT APPLICATION

(11) **EP 4 656 506 A1**
(43) Date of publication of application: **03.12.2025**
(21) Application number: 24178839.7
(22) Date of filing: 29.05.2024
(51) Int. Cl.: B63B 1/12, B63B 35/44, C25B 1/04, C25B 9/70, F24S 20/70, H02S 20/00, E02B 17/00

(54) **A FLOATING POWER PLANT AND AN OFFSHORE ELECTRICITY GENERATION PLANT**

(71) Applicant: SolarDuck Holding B.V., 3012 CA Rotterdam (NL)
(72) Inventor: HUISKAMP, Ewoud, 2623 MK Delft (NL); HOOGENDOORN, Cornelis Frans Donald, 2803 AW Gouda (NL)
(74) Representative: De Vries & Metman

(57) **Abstract**

A floating power plant (2) comprises a plurality of interconnected floating platforms (6) which are movable with respect to each other. Each floating platform (6) comprises a floating member (8), wherein the floating member (8) of at least one floating platform (6) has an internal chamber (9) for storing hydrogen. The floating power plant (2) is provided with an electrolyzer including a hydrogen output and a fuel cell including a hydrogen input. The largest number of the floating platforms (6) is provided with PV panels (3) and at least one of the floating platforms (6) is provided with the electrolyzer and/or the fuel cell. The electrolyzer is electrically connectable to the PV panels (3) and the hydrogen output and/or the hydrogen input is fluidly connectable to the internal chamber (9) of the floating member (8) of the at least one platform (6).

## Description

The present invention relates to a floating power plant, comprising a plurality of interconnected floating platforms which are movable with respect to each other, wherein each floating platform comprises a floating member.

Such a a floating power plant is known from EP 4 190 681 of the same applicant. The known power plant comprises a plurality of triangular floating platforms which are pivotally connected to each other such that they form a hexagonal structure as seen from above. Each of the floating platforms is provided with PV panels so as to generate electricity.

An object of the invention is to provide a floating power plant which is able to provide electrical power during periods of limited solar energy.

This object is accomplished with the floating power plant according to the invention, wherein the floating member of at least one floating platform has an internal chamber for storing hydrogen, wherein the floating power plant is provided with an electrolyzer including a hydrogen output and a fuel cell including a hydrogen input, wherein the largest number of the floating platforms is provided with PV panels and at least one of the floating platforms is provided with the electrolyzer and/or the fuel cell, wherein the electrolyzer is electrically connectable to the PV panels and the hydrogen output and/or the hydrogen input is fluidly connectable to the internal chamber of the floating member of the at least one floating platform.

This means that the floating power plant has at least three interconnected floating platforms of which at least two floating platforms are provided with the PV panels and at least one of the floating platforms is provided with the electrolyzer and/or the fuel cell. In the event that under operating conditions the actual electricity production capacity is higher than the actual electricity demand, at least a part of the produced electricity can be supplied to the electrolyzer for producing hydrogen and subsequently the produced hydrogen can be stored in the internal chamber of the floating member. In the event that under operating conditions the actual electricity production capacity is lower than the actual electricity demand, hydrogen stored in the internal chamber can be supplied to the fuel cell for producing electricity. An advantage of the floating power plant according to the invention is that during periods of limited solar energy it can still provide electrical power, for example in winter time when daylight is relatively short. The electricity can be transported to land via an electrical transformer, which may be electrically coupled to an electrical grid on shore.

It is noted that the floating member of the at least one floating platform may have a single internal chamber. Furthermore, the electrolyzer may form a centralized hydrogen production site, whereas the fuel cell may form a centralized conversion site for conversion of hydrogen to electrical power. In practice, the electrolyzer and the fuel cell may be located at the same floating platform. The hydrogen output and/or the hydrogen input may be fluidly connectable to the internal chamber of the floating member of the at least one platform through controllable valves.

The floating member of the at least one floating platform may be elongate in vertical direction. A lower portion of the floating member may be submerged in the water, whereas an upper portion thereof may be located above water level. The upper portion of the floating member may be part of a truss-shaped supporting structure for supporting the PV panels, which is also located above water level.

In an embodiment the height to width ratio of the floating member is larger than 5, preferably 10.

The electrolyzer may be a PEM electrolyzer.

The electrolyzer and the fuel cell may be integrated in a single bi-directional electrolyzer/fuel cell system. This is also called a regenerative fuel cell.

The floating power plant may be configured such that under operating conditions maximum pressure in the internal chamber of the floating member of the at least one floating platform is lower than 20 bar, which means that piping and the internal chamber may have a relatively simple structure because of the relatively low pressure level.

Preferably, the floating member of the at least one floating platform has a single-walled casing which also forms a single-walled casing of the internal chamber, since this provides a relatively simple mechanical structure. The internal chamber does not require a separate liner, but its casing coincides with the single-walled casing of the floating member. Hence, it is not necessary to fix a separate hydrogen storage container inside the floating member.

The single-walled casing may be made of aluminium, steel, carbon or a fibre reinforced composite.

In an embodiment the floating member of the at least one floating platform is one of a plurality of similar floating members of the at least one floating platform located at a distance from each other, wherein respective internal chambers of the floating members are fluidly connectable to each other and/or fluidly connectable to the hydrogen output and/or the hydrogen input. This provides increased hydrogen storage capacity.

In a further embodiment the floating members of several floating platforms are similar to the floating member of the at least one floating platform, wherein the internal chambers of the floating members are fluidly connectable to the internal chamber of the floating member of the at least one floating platform and/or fluidly connectable to the hydrogen output and/or the hydrogen input. This provides further increased hydrogen storage capacity.

The invention is also related to an offshore electricity generation plant, comprising the floating power plant as described hereinbefore, wherein the floating power plant is a first floating power plant and the electrolyzer is electrically connectable to PV panels of a second floating power plant located at a distance from the first floating power plant, which second floating power plant includes a plurality of interconnected floating platforms which are movable with respect to each other whereas each floating platform of the second floating power plant comprises a floating member. The first and second floating power plants may be similar, but only the first floating power plant may be provided with the electrolyzer and the fuel cell.

In an embodiment the floating members of the second floating power plant are similar to the floating member of the at least one floating platform of the first floating power plant, wherein the internal chambers of the floating members of the second floating power plant are fluidly connectable to the internal chamber of the floating member of the at least one floating platform of the first floating power plant and/or fluidly connectable to the hydrogen output and/or the hydrogen input, for example through a flexible tube.

The distance between the first and second floating power plants may be larger than half of the maximum width of one of the first and second floating power plants or larger than 100m.

The invention will hereafter be elucidated with reference to very schematic drawings showing an embodiment of the invention by way of example.
Fig. 1 is an illustrative view of an embodiment of an offshore electricity generation plant according to the invention.
Fig. 2 is a perspective view of two interconnected floating platforms of the offshore electricity generation plant as shown in Fig. 1.

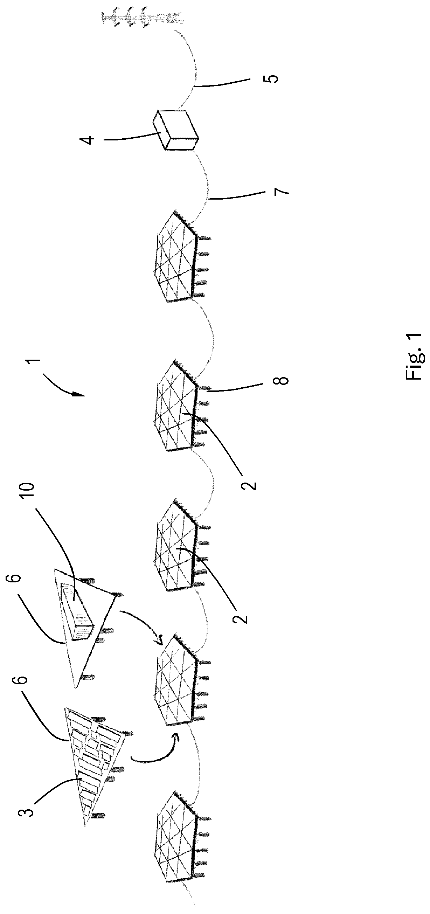

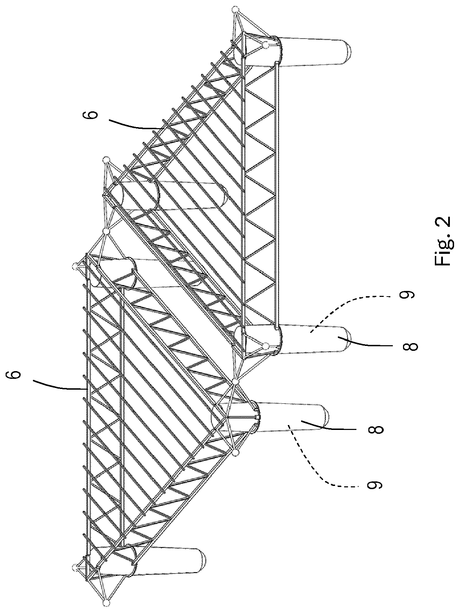

Fig. 1 shows an offshore electricity generation plant 1 including a string of interconnected floating power plants 2 that are provided with PV panels 3 for generating electricity. Generated electricity is transported from the floating power plants 2 to an electrical transformer 4 and then to consumers on shore through a high voltage cable 5. Each of the floating power plants 2 comprises a plurality of interconnected floating platforms 6 which are movable with respect to each other through pivots. Fig. 2 shows two of the floating platforms 6 for supporting the PV panels 3. In this case the floating platforms 6 have triangular shapes which are coupled to each other such that each floating power plant 2 has a hexagonal shape. The floating platforms 6 and the floating power plants 2 may have different shapes in an alternative embodiment. The floating power plants 2 are anchored to the sea bottom at a distance from each other, for example 100m from each other. The PV panels 3 of several floating power plants 2 are electrically connected to each other through electrical cables 7.

Each floating platform 6 comprises a plurality of floating members 8, in this case three floating members 8 which are located at respective corners of each floating platform 6. Each of the floating members 8 is elongate in vertical direction and is hollow so as to form an internal chamber 9 which is suitable for storing hydrogen. The height to width ratio of the respective floating members is larger than 5. A lower portion of each floating member 8 is submerged in the water, whereas an upper portion thereof is located above water level. The upper portions of the floating members 8 of each floating platform 6 are part of a truss-shaped supporting structure for supporting the PV panels 3, which is also located above water level.

Referring to Fig. 1, one of the floating platforms 6 of one of the floating power plants 2 is provided with a single bi-directional electrolyzer/fuel cell system, which may also be called a regenerative fuel cell 10. The regenerative fuel cell 10 may comprise a Proton Exchange Membrane (PEM). The regenerative fuel cell 10 has a hydrogen port which forms a hydrogen output when the regenerative fuel cell 10 operates as an electrolyzer and forms a hydrogen input when the regenerative fuel cell 10 operates as a fuel cell. The PV panels 3 of several floating power plants 2 are electrically connectable to the regenerative fuel cell 9 via the electrical cable 7.

Under operating conditions, if more electricity is generated by the PV panels 3 than demanded by the consumers on shore, the electricity will be transferred to the regenerative fuel cell 10 for production of hydrogen, whereas if electricity demand on shore is higher than actual capacity of the PV panels 3 hydrogen will be transported to the regenerative fuel cell 6 for production of electricity. For that reason, the regenerative fuel cell 10 is electrically connectable to the PV panels 3, whereas its hydrogen port is fluidly connectable to the internal chambers 9 of the respective floating members 8, for example through valves (not shown).

Fig. 1 shows that the largest number of the floating platforms 6 of the floating power plant 2 that comprises the regenerative fuel cell 10 is provided with PV panels 3, whereas the regenerative fuel cell 10 occupies a minor part of the floating platforms 6, in this case only a single floating platform 6. The floating members 8 of different floating platforms 6 of each floating power plant 2 are fluidly connectable to each other, whereas the floating members 8 of the different floating power plants 2 are also fluidly connectable to each other and/or fluidly connectable to the regenerative fuel cell 10. They may be fluidly connectable through flexible tubes (not shown).

During hydrogen production hydrogen will be stored in the internal chambers 9 of the respective floating members 8 at relatively low pressure, for example 15 bar. Therefore, the electricity generation plant 1 is configured such that under operating conditions maximum pressure in the internal chambers 9 of the floating members 8 is lower than 20 bar. Due to the relatively low storage pressure each of the floating members 8 has a single-walled casing which also forms a single-walled casing of the internal chamber 9. Preferably, the single-walled casing is made of aluminium, but alternative materials such as steel, carbon or a fibre reinforced composite are also conceivable. Hydrogen can be transported from the regenerative fuel cell 10 to the internal chambers 9 through one or more compressors (not shown).

The invention is not limited to the embodiment shown in the drawings and described hereinbefore, which may be varied in different manners within the scope of the claims. Although the floating power plant is primarily intended for providing electrical power during periods of limited solar energy by converting hydrogen to electricity through the fuel cell, it is also conceivable to transport at least a part of the stored hydrogen to land via pipes or collect at least a part of the stored hydrogen in a ship and transport it to land. Furthermore, instead of the regenerative fuel cell 10 the floating power plant may also be provided with a separate fuel cell and a separate elektrolyzer, which may be installed on the same floating platform or on different floating platforms.

## Claims

1. A floating power plant (2), comprising a plurality of interconnected floating platforms (6) which are movable with respect to each other, wherein each floating platform (6) comprises a floating member (8), wherein the floating member (8) of at least one floating platform (6) has an internal chamber (9) for storing hydrogen, wherein the floating power plant (2) is provided with an electrolyzer including a hydrogen output and a fuel cell including a hydrogen input, wherein the largest number of the floating platforms (6) is provided with PV panels (3) and at least one of the floating platforms (6) is provided with the electrolyzer and/or the fuel cell, wherein the electrolyzer is electrically connectable to the PV panels (3) and the hydrogen output and/or the hydrogen input is fluidly connectable to the internal chamber (9) of the floating member (8) of the at least one floating platform (6).

2. A floating power plant (2) according to claim 1, wherein the floating member (8) of the at least one floating platform (6) is elongate in vertical direction.

3. A floating power plant (2) according to claim 2, wherein the height to width ratio of the floating member (8) is larger than 5, preferably 10.

4. A floating power plant (2) according to any one of the preceding claims, wherein the electrolyzer is a PEM electrolyzer.

5. A floating power plant (2) according to any one of the preceding claims, wherein the electrolyzer and the fuel cell are integrated in a single bi-directional electrolyzer/fuel cell system (10).

6. A floating power plant (2) according to any one of the preceding claims, wherein the floating power plant (2) is configured such that under operating conditions maximum pressure in the internal chamber (9) of the floating member (8) of the at least one floating platform (6) is lower than 20 bar.

7. A floating power plant (2) according to any one of the preceding claims, wherein the floating member (8) of the at least one floating platform (6) has a single-walled casing which also forms a single-walled casing of the internal chamber (9).

8. A floating power plant (2) according to claim 7, wherein the single-walled casing is made of aluminium, steel, carbon or a fibre reinforced composite.

9. A floating power plant (2) according to any one of the preceding claims, wherein the floating member (8) of the at least one floating platform (6) is one of a plurality of similar floating members (6) of the at least one floating platform (6) located at a distance from each other, wherein respective internal chambers (9) of the floating members (8) are fluidly connectable to each other and/or fluidly connectable to the hydrogen output and/or the hydrogen input.

10. A floating power plant (2) according to any one of the preceding claims, wherein the floating members (8) of several floating platforms (6) are similar to the floating member (8) of the at least one floating platform (6), wherein the internal chambers (9) of the floating members (8) are fluidly connectable to the internal chamber (9) of the floating member (8) of the at least one floating platform (6) and/or fluidly connectable to the hydrogen output and/or the hydrogen input.

11. An offshore electricity generation plant (1), comprising the floating power plant (2) according to any one of the preceding claims, wherein the floating power plant (2) is a first floating power plant and the electrolyzer is electrically connectable to PV panels (3) of a second floating power plant located at a distance from the first floating power plant, which second floating power plant (2) includes a plurality of interconnected floating platforms (6) which are movable with respect to each other whereas each floating platform (6) of the second floating power plant (2) comprises a floating member (8).

12. An offshore electricity generation plant (1) according to claim 11, wherein the floating members (8) of the second floating power plant (2) are similar to the floating member (8) of the at least one floating platform (6) of the first floating power plant (2), wherein the internal chambers (9) of the floating members (8) of the second floating power plant (2) are fluidly connectable to the internal chamber (9) of the floating member (8) of the at least one floating platform (6) of the first floating power plant (2) and/or fluidly connectable to the hydrogen output and/or the hydrogen input.

13. An offshore electricity generation plant (1) according to claim 11 or 12, wherein the distance between the first and second floating power plants (2) is larger than half of the maximum width of one of the first and second floating power plants (2) or larger than 100m.
